# EUROPEAN PATENT APPLICATION

(11) **EP 0 716 008 A2**
(43) Date of publication of application: **12.06.1996**
(21) Application number: 95203346.2
(22) Date of filing: 05.12.1995
(51) Int. Cl.: B62K 13/02, B62K 13/04

(54) **Tricycle**

(30) Priority: 06.12.1994 GB 9424603
(71) Applicant: Chattin, Peter John, Dodford, Bromsgrove B61 9BQ (GB)
(72) Inventor: Chattin, Peter John, Dodford, Bromsgrove B61 9BQ (GB)
(74) Representative: Gee, Steven William

(57) **Abstract**

A tricycle (10) is taught which comprises two interconnected frames (12,14) lying fore and aft, each frame having a steering tube (19,20) and a wheel fork (2,6,7), the front frame including at least one coupling bar (32,132) having one end connected to a fork (6) of the front frame, characterised in that the coupling bar has its other end connected to the steering tube (20) of the rear frame (14). Also taught is a method of making, and a method of assembling, the tricycle, and a device for interconnecting two bicycle frames to form a tricycle.

## Description

### FIELD OF THE INVENTION

This invention relates to a tricycle.

### STATEMENT OF PRIOR ART

Geometrical statements used herein, such as "above", "below", "fore", "aft", "front", "rear", assume that a cycle is in its normal (upright) position of use.

Cycles have long been known; they comprise a wheeled vehicle with a rigid frame comprising (i) a saddle tube receiving a saddle shaft upon which is mounted a saddle (on which a rider can sit), (ii) a steering tube receiving a steering shaft (or "column") which the rider can turn (as by handlebars) for vehicle steering, and (iii) a drive tube receiving a drive shaft which the rider can turn (as by foot pedals) for vehicle propulsion.

Typically the angular and axial position of at least the steering shaft and saddle shaft relative to its respective tube can be altered, as by the rider.

Some cycles have one wheel, and are known as "unicycles".

Worldwide, however, probably most cycles in use have two wheels and are known as "bicycles", the wheels being fore and aft of the rider's saddle i.e. with one wheel behind the other, and spaced longitudinally apart. Although most bicycles are equipped only for one rider, some bicycles ("tandems") have two saddles and two sets of pedals, and so are suited for two riders (one behind the other) but arranged so that only the front rider can steer.

A "bicycle" frame is able to carry transversely-spaced front wheel forks and also trasversely-spaced rear wheel forks, by means of which the two respective wheels can rotatably but releasably be connected to the frame.

Usually for a bicycle the steering shaft is integral with or is otherwise firmly secured to the front wheel forks, so that the shaft and front wheel forks can be turned together.

During bicycle assembly the steering shaft is fed upwardly through the steering tube, and then the handlebars are fitted, whereby to locate the front wheel forks and the handlebars to opposite ends of the steering tube; conversely, to remove the front wheel forks it is first necessary to release the handlebars, so that the front wheel forks and steering shaft can be slid out of the steering tube. For releasable engagement of the handlebars to the steering shaft there may be used a known clamp, or a known threaded connection.

Cycles with three wheels are known as "tricycles". Most tricycles have their wheels at the apices of a triangle, because this permits a stable arrangement, inhibiting any tendency for the tricycle to turn onto its side; such tricycles are widely used by children, and the elderly. A disadvantage of such a tricycle arrangement however is that it is constructed to carry only one rider, and this can be dangerous e.g. if a child rides such tricycle amongst traffic.

A tricycle is known in which the three wheels are in line (fore and aft), with only the front wheel steerable. The tricycle is assembled using the frame, saddle shaft, steering shaft and drive shaft of each of two bicycles, but with the front wheel of the rear bicycle removed so that the front wheel forks of the rear "cycle" are coupled to the rear wheel forks of the front "cycle". The coupling is effected (by intermediate coupling bars) within the projected area of the rear wheel of the front cycle.

Whilst the rear cycle is now controlled by the front cycle, permitting a person, such as a child, seated on the rear saddle effectively to be accompanied in traffic by an adult seated on the front saddle and in control of the tricycle, this tricycle arrangement has a number of disadvantages, limiting its utility, including that the coupling can only be effected using a rear bicyclc with front forks spaced relatively widely apart (so that it may not be possible to connect a child's bicycle behind an adult's bicycle); that a pair of fixed intermediate coupling bars are required between the ends of the rear wheel forks of the front cycle and the front forks of the rear cycle (so adding to the weight and complication of the tricycle); and that the front forks of the rear cycle are at a height determined by the fixed intermediate coupling bars.

Furthermore the front forks of the rear cycle must be long enough to engage with the coupling bars, and without the steering shaft contacting the wheel or wheel guard of the front cycle, and also must be spaced sufficiently widely apart so that again those front forks (and brakes fitted thereupon) do not contact the rear wheel of the front cycle.

### STATEMENT OF THE INVENTION

We now provide a tricycle comprising two interconnected frames lying fore and aft, each frame having a steering tube and a wheel fork, the front frame having at least one coupling bar having one end connected to a fork of the front frame, characterised in that the coupling bar has its other end connected to the steering tube of the rear frame. The fork of the front frame will be a rear wheel fork.

Usefully the said other end of the coupling bar is releasably connected to said steering tube. Thus we also provide a tricycle comprising first and second rigid frames lying fore and aft, each frame having a steering tube, a drive tube and a saddle tube, and frame connecting means between the first frame and the second frame characterised in that the frame connecting means comprises a coupling bar which includes a rod removably received in the steering tube of the second frame. The rod may be solid, or hollow.

For easy and secure coupling we propose a rod which can be fitted into the lower end of the steering tube of the rear cycle, and of a length to project from the upper end of that steering tube whereby to permit re-connection of the handlebars thereto. Thus the rod will have substantially the same external diameter as the steering shaft.

In a preferred embodiment the rod can be hinged to the coupling bar so as to be able to swing about the (rear) end of the coupling bar, whereby to adopt a downwardly-hanging "stowed" position when not in use. Thus with the adult's bicycle in independent use (not coupled as above described e.g. to a child's bicycle) the "stowed" position being is behind the rear wheel of the adult's bicycle, and thus behind the front frame by which the rod is carried.

In use, the connection to the rear steering tube will be outside the projected area of the front frame rear wheel, and will be effected with the steering shaft and associated forks of the rear frame removed. Desirably it will be the terminal ends of the coupling bar which are so connected, but the connections can be away from said terminal ends in special circumstances.

If the tricycle is made from two existing bicycles, the wheels of the front bicycle will be retained in position on the front frame, and the rear wheel of the rear bicycle will be retained in position on the rear frame. The front wheel of the rear bicycle is not needed, and can be stored, as can the wheel forks associated therewith.

Thus according to a further feature of the invention we provide a method of assembling a tricycle which includes the steps (i) of removing a wheel of one bicycle from a front wheel assembly comprising a steering shaft, front wheel forks connected to said steering shaft, and the said wheel, and (ii) of connecting part of the said assembly then remaining to the rear forks of another bicycle characterised by removing the said steering shaft and front wheel forks, replacing the steering shaft by a coupling unit and connecting the coupling unit to the rear forks of said another bicycle.

Because to remove the front wheel and forks of the rear bicycle it is first necessary to disconnect the rear bicycle handlebars, those handlebars or equivalent are replaced during tricycle assembly, for use by the rear rider i.e. not for steering but for balance. Preferably therefore the coupling unit has a rod end (usefully tubular) of an outer diameter closely to fit within the steering tube of the rear frame i.e. the same outer diameter as the steering shaft it has replaced, so that the existing handlebar can be directly connected thereto

Desirably the coupling unit will comprise a rigid coupling bar and a coupling rod hinged thereto.

Preferably the coupling unit is pivotally mounted relatively to the said rear forks so that the coupling bar is angularly swingable in accordance with the preferred height of the rear frame steering tube; in particular therefore the coupling unit can advantageously connect to a frame (steering tube) of a small child's cycle as well as to a frame of an adult's cycle.

Usefully the coupling unit can be adjustably but rigidly fixed when a suitable height for the rear frame steering tube has been decided. In a useful embodiment the coupling bar mounts one end of a tension bar of adjustable length and for which the other end is connected to the saddle tube of the front frame i.e. when the coupling rod has been positioned within the steering tube of the rear cycle.

We also provide a method of making a tricycle from two bicycle frames, each bicycle frame having a steering shaft, front wheel forks and rear wheel forks, the forks extending to either side of a respective wheel characterised by removing the steering shaft, front forks and associated wheel from the steering tube of one of said bicycles, and securing two coupling bars between the said steering tube and the rear forks of the other one of said bicycles. The said steering tube is behind the rear forks in the normal ridden tricycle condition.

We also provide a method of making a tricycle which includes connecting front and rear bicycle frames, the front bicycle frame having a coupling bar connected to its rear forks, the rear bicycle frame being without a front wheel characterised in that the coupling bar is connected to the steering tube of the rear bicycle. The connection to the steering tube will be outside the projected area of the front bicycle rear wheel.

In a preferred embodiment a bicycle frame carries a coupling bar and tension bar; thus when it is desired to affix a second bicycle e.g. a young child's bicycle to be ridden in busy traffic, the forks and front wheel of the child's bicycle are removed from the steering tube, and the coupling bar connected to the steering tube, whilst the tension bar is connected between the front saddle tube and the rear steering tube.

We also propose a device for interconnecting two bicycle frames, the device comprising a rod, a pair of coupling bars connected to the rod, and at least one tension bar, the rod being adapted to connect to the steering tube of one of the said frames, the coupling bars being adapted to connect the rod to the rear forks of the other of said frames, and the tension bar being adapted to connect the coupling bars to the saddle tube of the other of said frames. Preferably, the tension bars are adjustable in length. Desirably, the rod is pivotably connected to the coupling bars.

### BRIEF DESCRIPTION OF THE DRAWINGS

The invention will be further described, by way of example, with reference to the accompanying drawings, in which:
- Fig.1: is a side view of a tricycle according to one aspect of the invention;
- Fig.2: is an exploded perspective view of a device for releasably interconnecting two bicycle frames such as those of the embodiment of Fig.1;
- Figs.3-5: are schematic side views of alternative forms of adjustable tension bar, for use with a device or on a tricycle; and
- Fig.4: is an exploded view of part of an alternative embodiment of the device.

### DETAILED DESCRIPTION OF PREFERRED EMBODIMENTS

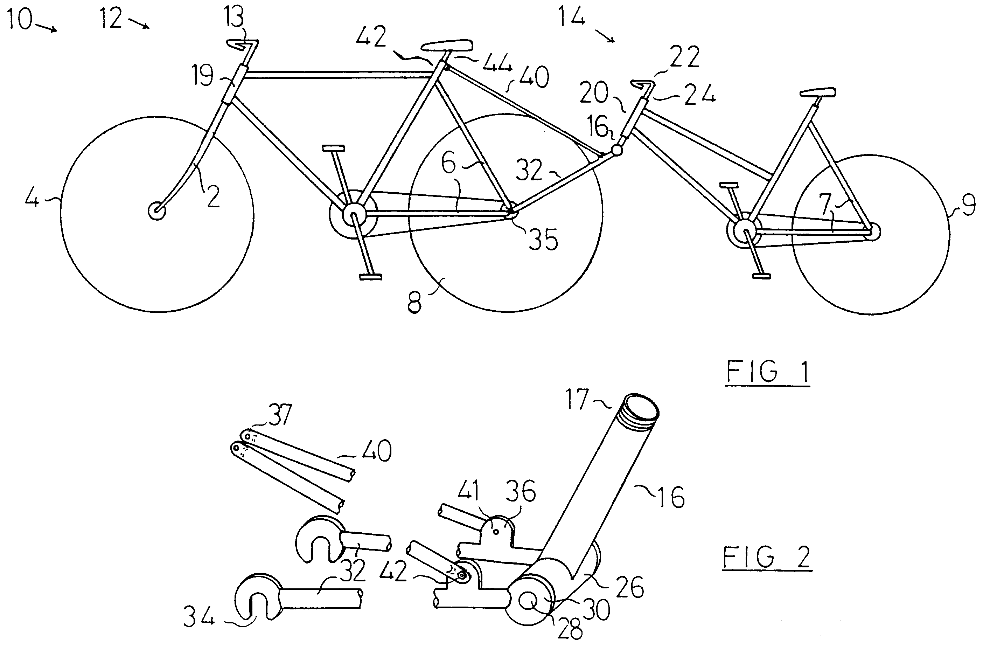

The tricycle 10 of Fig.1 is constructed from a front bicycle frame 12 and a rear bicycle frame 14. The front bicycle frame 12 has a pair of front wheel forks 2 extending to either side of front wheel 4, and a pair of rear wheel forks 6 extending to either side of rear wheel 8. The rear bicycle frame 14 has a pair of rear wheel forks 7 extending to either side of rear wheel 9.

Front frame 12 has handlebars 13 for steering the tricycle 10, rotatably mounted in front steering tube 19.

During assembly of the tricycle, in this embodiment from two bicycles, the rear frame 14 has previously had its front wheel, front forks and associated steering shaft removed (downwardly as viewed, and after release of the handlebars 22); thereafter a rod 16 of substantially the same external diameter as that of the steering shaft, to be a sliding fit therein, has been fed upwardly into the steering tube, and handlebars 22 reconnected to the upper end of rod 16, in a preferred embodiment to a part of the rod projecting from the steering tube. Thus the steering shaft of the former independent bicycle frame 14 has been replaced by rod 16, rod 16 forming part of a coupling unit which includes coupling bar 32.

It will be understood that the brake calipers of the front wheel of the rear frame 14 have been removed together with the forks and wheel; the brake cable is released from the lever (not shown) which lever remains attached to handlebars 22.

The invention thus allows a parent to convert for instance an existing adult's bicycle and an existing child's bicycle into the tricycle 10, by coupling the respective frames. In an alternative embodiment the tricycle 10 can be factory-made, and then the respective frames will be connected as described, without need however first to remove the front forks and wheel of the rear cycle (which will not have been fitted).

As shown in Fig.2, in this embodiment the rod 16 has external threads 17, which threads can accept a nut by means of which the rod may be retained within the steering tube 20. The rod is tubular, to accept the handlebars 22 of the rear frame, for use by the rear tricycle rider. A further nut, not shown, secures the handlebar shaft 24 to the rod 16, in a similar fashion to the removed steering shaft.

The rod 16 is connected to a tubular shaft 26 which is pivotable upon non-rotatable spindle 28. Opposed ends of spindle 28 are secured to respective end caps 30.

Each end cap 30 is connected to one end of a respective coupling bar 32, the coupling unit of Fig.2 including two aligned coupling bars 32 transversely separated by a distance selected to avoid contact with wheel 8 or associated parts e.g. mudguard etc.

The other end of each coupling bar 32 has a downwardly-facing recess 34, of a size to fit over the non-rotatable spindle 35 of the rear wheel 8, thereby to be secured to the rear forks of the front frame in known fashion, preferably by the fork wheel nuts.

Adjacent the end cap 30 each coupling bar has an upwardly directed projection 36 to which is connected one end of a tension bar 40. In this embodiment each projection 36 has a stud 41 with an outwardly-directed threaded shank; each coupling bar has an aperture sized to slide over the respective stud shank, to be retained by a nut 42.

In this Fig.2 embodiment therefore the respective tension bar 40 is releasably secured to the coupling bar 32, for ease of manufacturer's packaging i.e. prior to customer fitment to front frame 12. In this embodiment therefore the tension bar 40 can be assembled to the coupling bar 32 by the user; in an alternative embodiment the tension bar is permanently fixed to the respective coupling bar e.g. in a factory where both are made. The tension bar 40 can be substantially straight, or it may be bent to pass through or around articles fitted to the front frame, such as a bicycle rack, for example.

An advantage of the disclosed Fig.2 type embodiment with a releasable securement between the tension bar 40 and the coupling bar 32 is that one coupling unit (rod 16, coupling bar 32, tension bar 40) can be used with different front frames; and particularly with respective front frames having different distances between the rear forks and the saddle tube. We do not however discount the possibility of a permanent fixing between the tension bar and coupling bar if the coupling unit is to be factory fitted e.g. as a standard item, between frames of known dimensions.

The front or leading end of each tension bar 40 is apertured at 37, and in this embodiment thereby connected to the front saddle tube 42; in a preferred embodiment the leading end of each tension bar is secured to a clamping bracket (not shown) of conventional form and which in known fashion surrounds the saddle tube 42; preferably the clamping bracket is dual-purpose, being used also to squeeze the saddle tube 42 whereby to inhibit unwanted movement of the saddle shaft 44.

In the embodiment of Figs.1 and 2, the respective tension bars 40 are not adjustable in length. The angle of the coupling bars 32 (as well therefore as the effective height of the rod 16 and so of the rear steering tube 20), is determined by the front frame design.

If however an alternative rear frame of a design size significantly different to that of the frame 14 is to be connected by such coupling unit to the front frame 12, that alternative rear frame will not ride at the intended "bicycle" angle. Specifically the relative heights of the alternative (rear frame) steering tube and saddle tube when in the tricycle mode will no longer be those originally specified for the bicycle mode i.e. different as between when the frames 12,14 are "coupled" as compared to when "uncoupled" and in normal (bicycle) use.

Whilst a small difference in relative handle bars to seat height may be acceptable to some users, we prefer that the angle of the coupling bars 32 be adjustable relative to front frame 12, so that the height of the fitted rear steering tube 20 (and thus of the forward part of the rear frame 14) can be controlled.

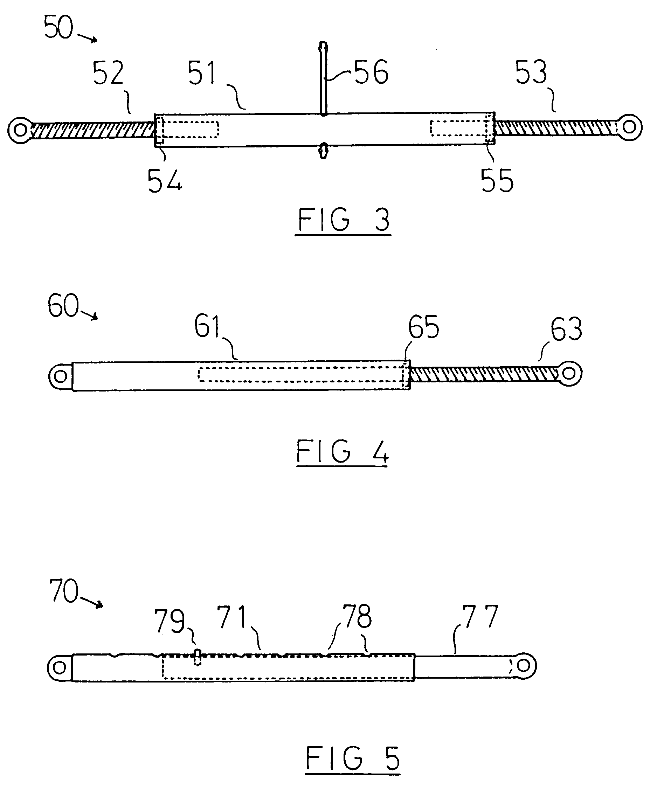

To achieve height control for steering tube 20, in a preferred embodiment the tension bars are adjustable in length. Three alternative arrangements for length adjustment are shown respectively in Fig.3, Fig.4, and Fig.5.

In Fig.3, a turn-buckle arrangement is shown. The tension bar 50 comprises a central tubular section 51 in which are mounted two oppositely-threaded shafts 52,53. The threads of the shafts mate with correspondingly threaded nuts 54,55 secured to opposite ends of the tubular section 51. When the opposed ends of the shafts 52,53 are fixed against rotation (one being connected to its respective coupling bar and the other to the saddle tube), the tubular section may be rotated by way of "tommy bar" 56, to either lengthen or shorten the tension bar 50. Tommy bar 56 can be made removable, but preferably is non-removable.

In the arrangement of Fig.4, the tension bar 60 comprises a tubular section 61 carrying a threaded nut 65 mating with corresponding threads of a shaft 63. Relative rotation of the shaft 63 and tubular section 61 will lengthen or shorten the tension bar 60. In an alternative embodiment, similar to that of Fig.3, both of the shafts have conventionally threads; it will be understood however (as compared to the embodiment of Fig.3), that in order to effect adjustment of the length of the tension bar of this alternative embodiment (and of the tension bar 60 of the embodiment of Fig.4), it will first be necessary to release one end of the tension bar (either at its connection with the coupling bar or the saddle tube).

In both tension bar 50 and 60, fast threads are used, to reduce the number of turns required to achieve the desired length change; however, in other embodiments threads of standard pitch are used.

In the arrangement of Fig.5, the tension bar 70 has a tubular section 71, which slidably locates a shaft 77 having a circular outer periphery (in cross section). The tubular section 71 has a series of spaced apertures 78; the shaft carries a spring-biassed peg 79, sized and outwardly biassed to project through an aperture 78. When it is desired to adjust the length of the tension bar 70, the peg 79 is depressed into the shaft, releasing it from its present aperture, and the shaft 76 may then be moved relative to the tubular section 74 until the peg aligns with another aperture, whereby to obtain a suitable tension bar length.

In an alternative embodiment the coupling bars can be adjustable in length, perhaps to contribute to an adjustment in height of the fitted rear steering tube, but also to accommodate a front cycle rear wheel of different diameter. Length adjustment of the coupling bar could be similar to that shown in any of Figs. 3-5, for example.

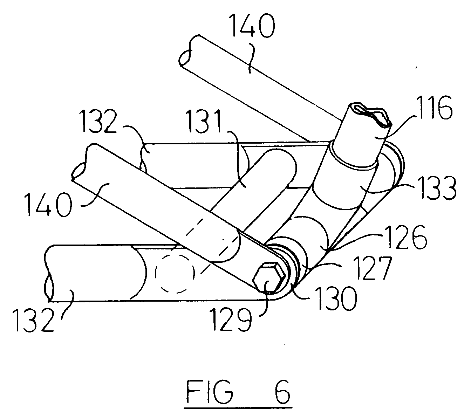

Fig.6 shows an alternative embodiment of device. In this embodiment, the rod 116 is rigidly connected to a tubular shaft 126, which is connected by way of nylon washers 127 between the apertured ends 130 of the coupling bars 132. A bolt 129 passes through the ends 130 of the coupling bars 132, and also through the washers 127 and the shaft 126. The bolt 129 also passes through the apertured ends of the tension bars 140; a nut (not seen) is fitted to the bolt 129 to secure all of these parts together.

A strengthening bar 131 is fixed (suitably welded) to both coupling bars 132 adjacent their respective ends 130, so that the coupling bars 132 are retained in a substantially rigid relationship.

The bolt 129 can be tightened to clamp the nylon washers 127, so that the washers act to dampen any pivoting movement between the front and rear frames; alternatively a spring damping mechanism may be fitted between an extension of the rod 116 and the strengthening bar 131, if desired.

The rod 116 also carries a spacer tube 133, i.e. a tube sized to slide over the rod 116 and abut the lower end of a fitted steering shaft. The spacer tube allows the rod to be used with bicycles having steering shafts of different lengths. Specifically, some smaller bicycles have relatively short steering tubes, and a spacer tube might be needed to permit the rod 116 (and likewise the rod 16 of Fig.2) to be used for such bicycles. In one embodiment, a long spacer tube is provided, which may be cut to length by the user to suit the steering shaft of a particular rear bicycle.

We foresee the greatest utility of our invention as being the permitted assembly of a tricycle from an adult's bicycle and a child's bicycle, usefully by a parent before riding out with a young person or a learner rider.

Thus parents may rightly be concerned even when accompanying a child if they are each on separate bicycles, with the child in effective sole control of his or her own bicycle. In particular, with the simple, effective and speedy tricycle assembly and disassembly arrangement of the present invention, a parent or guardian when intending to accompany the child in a potentially dangerous environment can remove the independent ability for rear frame steering; but replace it for supervised bicycle training in a safe environment.

However, we do not discount the use of our invention in the assembly of two similarly-sized (e.g. adult) bicycles, in which case the rod 16,116 would necessarily be higher and thus closer to the saddle tube 42 of the front cycle than in the embodiment of Fig.1.

On a tricycle according to the present invention, whether customer assembled or manufacturer assembled, an inexperienced rider is less likely to encounter difficulties caused e.g. by erratic riding, or failure to check for other traffic before effecting a U-turn, adding to safety; but as the rear rider of the assembled tricycle, the child or other "assisted" rider can help to propel the tricycle.

## Claims

1. A tricycle (10) comprising two interconnected frames (12,14) lying fore and aft, each frame having a steering tube (19,20) and a wheel fork (2,6,7), the front frame including at least one coupling bar (32,132) having one end connected to a fork (6) of the front frame, characterised in that the coupling bar has its other end connected to the steering tube (20) of the rear frame (14).

2. A tricycle comprising three wheels (4,8,9) carried by front and rear interconnected frames (12,14), the rear frame (14) being behind the front frame (12), the rear frame (14) being non-steerable, each frame including a steering tube (19,20) and at least one wheel fork (2,6,7), each steering tube being outside the projected area of a wheel, the front frame including at least one coupling bar (32,132) having one end connected to a rear fork (6) of the front frame, characterised in that the coupling bar (32,132) has its other end connected to the steering tube (20) of the rear frame (14).

3. A tricycle according to Claim 2 characterised in that the coupling bar (32,132) has its other end connected to a rod (16,116) fitted into the the steering tube (20) of the rear frame (14).

4. A tricycle according to Claim 3 characterized in that the rod (16,116) is hollow, in that the rod is a tube which is a sliding fit into the steering tube of the rear frame, and in that the rod has a part projecting from the steering tube with the handlebar shaft (24) of the rear frame secured to the said part.

5. A tricycle according to Claim 3 characterized in that the rod is connected to a tubular shaft (26,126) pivotable upon a non-rotatable spindle (28,129), the spindle being joined to respective end parts (30,130), the end parts being joined to one end of a respective coupling bar, the other end of the coupling bar being releasably secured to a respective rear fork.

6. A tricycle according to Claim 5 characterized in that a tension bar (40,140) is secured to each coupling bar, in that the tension bar is pivotally and releasably coupled to the coupling bar, and in that the front frame has a saddle tube (42) to which the other end of the tension bar is secured.

7. A tricycle according to Claim 6 characterized in that the tension bar is of adjustable length, and in that the tension bar includes one of a turnbuckle arrangement (51,52,53), a threaded arrangement (61,63) and a shaft (77) slidable in a tube (71) with spaced apertures (78) selectively entered by a holding peg (79).

8. A method of assembling a tricycle (10) as claimed in claim 1 characterized by removing the steering shaft (24) and front wheel forks from a bicycle, replacing the steering shaft by a coupling unit (16,26,30,32; 116,130,132) and connecting the coupling unit to the rear forks (6) of another bicycle, the said bicycle having the aft frame (14) of said tricycle and the said another bicycle having the fore frame (12) of said tricycle.

9. A method of making a tricycle (10) as claimed in claim 1 from two bicycle frames (12,14), each bicycle frame having a steering shaft (19,20), front wheel forks (2) and rear wheel forks (6), the forks extending to either side of a respective bicycle wheel (4,8,9) characterized by removing the steering shaft, front forks and associated wheel from the steering tube of one of the bicycles, and securing two coupling bars (32,132) between the said steering tube and the rear forks of the other one of said bicycles so that the said steering tube is behind the rear forks in the normal ridden tricycle condition.

10. A device (16,26,30,32; 116,130,132) for interconnecting two bicycle frames (12,14) to form a tricycle (10) as claimed in claim 1 characterized in that the device comprises a rod (16,116), a pair of coupling bars (32,132) connected to the rod, and at least one tension bar (40,140), the rod being adapted to connect to the steering tube (20) of one of the said frames (14), the coupling bars being adapted to connect the the rod to the rear forks (6) of the other of said frames (12), and the tension bar being adapted to connect the coupling bars to the saddle tube (42) of the other of said frames, in that the tension bar is adjustable in length and in that the rod is pivotally connected to the coupling bars.
